# FASCICULE DE BREVET EUROPEEN

(11) **EP 3 601 764 B1**
(45) Date de publication et mention de la délivrance du brevet: **19.01.2022**
(21) Numéro de dépôt: 18712474.8
(22) Date de dépôt: 19.03.2018
(51) Int. Cl.: F02B 77/04

(54) **AMÉLIORATION D'UNE INSTALLATION DE NETTOYAGE D'UN MOTEUR À COMBUSTION INTERNE**
VERBESSERTE REINIGUNGSANLAGE FÜR EINE BRENNKRAFTMASCHINE
IMPROVED CLEANING INSTALLATION FOR AN INTERNAL COMBUSTION ENGINE

(30) Priorité: 20.03.2017 FR 1770270
(43) Date de publication de la demande: 05.02.2020
(73) Titulaire: Flex Fuel - Energy Development, 06560 Valbonne (FR)
(72) Inventeur: LE POLLES, Sébastien, Alain, 77690 Montigny-sur-Loing (FR)
(74) Mandataire: INNOV-GROUP
(86) Numéro de dépôt international: PCT/IB2018/051821
(87) Numéro de publication internationale: WO 2018/172910

(56) Documents cités:
- EP-A1- 0 412 076
- WO-A1-2009/156670
- FR-A1- 2 880 069
- US-A- 6 073 638
- US-A1- 2006 218 907
- US-A1- 2008 283 098

## Description

### Domaine technique et état de l'art

L'invention concerne une installation de nettoyage d'un système de motorisation comprenant un moteur à combustion interne, installation du type comprenant un dispositif d'injection agencé pour injecter un fluide nettoyant dans le moteur. L'invention est notamment intéressante pour l'entretien des véhicules à moteur, tels que automobiles, motos, bateaux, ...., mais également pour l'entretien de moteurs industriels tels que ceux utilisés pour la production d'énergie, ....

Pour optimiser le fonctionnement d'un moteur, on cherche souvent à abaisser la température de combustion et à réduire la quantité d'oxygène disponible à l'intérieur du moteur tournant. Ceci permet d'améliorer les performances du moteur et, notamment dans le cas des moteurs Diesel, de réduire la production de NOx, composés d'oxydes d'azote particulièrement polluants.

Pour abaisser la température de combustion et limiter la quantité d'oxygène, une technique développée dans les années 1970 consiste à rediriger une partie des gaz d'échappement, inertes, vers l'entrée du mélange combustible-air du moteur. Une vanne EGR (pour Exhaust gaz recirculation) à débit variable est positionnée sur le circuit de recirculation entre l'échappement et l'entrée ; le taux d'ouverture de la vanne définit la quantité de gaz d'échappement que la vanne EGR laisse passer en direction de l'entrée du moteur, le taux d'ouverture est piloté par un calculateur du véhicule, en fonction de paramètres du moteur tels qu'une température mesurée des gaz d'échappement, une puissance demandée au moteur, ... La production d'oxydes d'azote dépendant notamment de la température et de la présence d'oxygène pendant la combustion, l'introduction de gaz brûlés agit sur les deux paramètres, température et proportion d'oxygène.

Si diminuer la température de combustion permet de diminuer la production de NOx et d'augmenter les performances du moteur, elle présente d'autres inconvénients. En effet, la combustion au sein du moteur est moindre, entre autres à cause de la teneur réduite en oxygène, elle génère ainsi plus d'hydrocarbures et donc plus de particules et de suies. Ce qui a notamment pour conséquence d'encrasser le circuit du moteur, le circuit d'échappement des gaz brûlés et le circuit de recirculation des gaz d'échappement. Des dépôts de suies considérables se forment ainsi dans le collecteur d'admission, le turbocompresseur et la vanne de régulation EGR, parfois à un point tel que des messages de défaut du moteur peuvent survenir. La vanne de régulation EGR peut aussi rester bloquée en position ouverte, ce qui fait qu'à pleine charge, une grande quantité de gaz d'échappement est mêlée à l'air de combustion. On observe alors, dans le cas d'un véhicule automobile, un panache de fumée noire et une perte de puissance lorsque le véhicule accélère. Ainsi, la combustion à basse température diminue le rendement moteur et augmente la pollution générée par le moteur.

Une technique connue pour nettoyer le moteur et ses circuits consiste à injecter un fluide nettoyant tel qu'un mélange gazeux d'hydrogène et d'oxygène dans le circuit d'admission pendant que le moteur tourne. L'oxydation de l'hydrogène améliore la combustion qui génère de la vapeur d'eau et du gaz carbonique ; à haute température, la vapeur d'eau et le gaz carbonique réagissent avec la calamine et permettent ainsi l'élimination de la calamine. La demande de brevet FR 15/02059 du même déposant décrit une installation pour la mise en oeuvre de cette technique.

### Description de l'invention

L'invention vise à améliorer l'efficacité d'une installation connue de nettoyage adaptée pour le nettoyage d'un système de motorisation comprenant un moteur à combustion interne et un circuit de circulation de gaz, le moteur comprenant une pluralité d'entrées de produits à brûler et une sortie de gaz d'échappement, le circuit de circulation de gaz comprenant une pluralité de conduites et une pluralité de pièces mobiles agencées ensemble pour amener un mélange gazeux approprié sur une des entrées du moteur, la dite pluralité de pièces mobiles comprenant au moins une pièce mobile. L'installation de nettoyage comprend un dispositif d'injection adapté pour réaliser une séquence de nettoyage du moteur en injectant un fluide nettoyant sur une des entrées du moteur.

L'installation selon l'invention est caractérisée en ce qu'elle comprend également un moyen de diagnostic agencé pour déterminer un taux d'encrassement du dit système de motorisation en fonction d'un taux de défectuosité d'au moins une des pièces mobiles, et un moyen de commande agencé pour fournir au dispositif d'injection des paramètres d'injection pour la mise en oeuvre de la séquence de nettoyage, les dits paramètres d'injection étant fonction du taux d'encrassement du système de motorisation.

Ainsi, dans une installation selon l'invention, l'injection de fluide de nettoyage est ajustée en tenant compte d'un taux d'encrassement du système de motorisation fonction d'un taux de défectuosité d'au moins une pièce mobile. La séquence de nettoyage est ainsi adaptée au besoin réel du moteur, et non basée uniquement sur un état d'encrassement statistique du moteur. Ceci garantit l'efficacité du nettoyage pour tous les systèmes de motorisation. Ceci permet également de mieux maîtriser la consommation globale de fluide de nettoyage de l'installation et le temps global d'utilisation de l'installation de nettoyage.

L'installation selon l'invention peut également être adaptée pour un système de motorisation comprenant un circuit de circulation de gaz agencé pour amener sur l'entrée du moteur un mélange gazeux approprié comprenant une partie des gaz d'échappement disponibles sur la sortie d'échappement du moteur.

La pluralité de pièces mobiles du système de motorisation prises en compte dans le cadre de l'invention peut comprendre un clapet d'admission (qui régule le débit d'un mélange gazeux comprenant de l'air avec ou ans gaz d'échappement, mélange gazeux amené sur une des entrées du moteur), et / ou une vanne EGR et / ou un organe mobile d'un turbo compresseur.

Selon un mode de mise en œuvre, le moyen de diagnostic est agencé pour commander un déplacement d'une pièce mobile entre deux positions extrêmes, les autres pièces mobiles de la pluralité de pièces mobiles étant maintenues dans une position fixe, et pour déterminer le taux de défectuosité de la dite pièce mobile en fonction d'une course parcourue entre les deux positions extrêmes de la pièce mobile et en fonction d'une course maximale théorique de la dite pièce mobile. Le diagnostic est ainsi réalisé directement sur la pièce mobile à nettoyer, pour avoir une information précise du taux de défectuosité de la dite pièce et ajuster ensuite la séquence de nettoyage en conséquence.

En variante, le moyen de diagnostic peut également être agencé pour lire une mémoire de défauts associée au moteur et, si une information relative à un défaut sur une pièce mobile est enregistré dans la mémoire de défauts, agencé pour déterminer le taux de défectuosité de la dite pièce mobile en fonction de la course parcourue entre les deux positions extrêmes de la pièce mobile, en fonction de la course maximale théorique et en fonction de l'information relative au défaut lue dans la mémoire de défaut. Le moyen de diagnostic prend ainsi en compte des informations déjà détectées par l'environnement du moteur, pour confirmer ou affiner le diagnostic réalisé.

Le moyen de diagnostic peut également être agencé pour déterminer successivement le taux de défectuosité de chaque pièce mobile. Chaque pièce mobile est ainsi diagnostiquée indépendamment des autres, pour affiner encore plus le diagnostic du système de motorisation et améliorer encore la séquence de nettoyage qui en découle.

Selon un mode de mise en oeuvre, le moyen de diagnostic est agencé pour, si le taux de défectuosité d'une pièce mobile est supérieur à une valeur prédéfinie, commander la mise en oeuvre d'une séquence de nettoyage initiale puis déterminer à nouveau le taux de défectuosité de la dite pièce mobile et pour alerter d'une pièce mobile défaillante si le taux de défectuosité déterminé à nouveau est supérieur ou égal au taux de défectuosité précédemment déterminé pour la dite pièce mobile. Ceci permet d'éviter de réaliser inutilement une séquence complète de nettoyage si une pièce mobile est trop encrassée pour être nettoyée correctement. Un remplacement de la pièce est dans ce cas préférable.

Le moyen de commande est quant à lui agencé pour :
- déterminer le taux d'encrassement du système de motorisation à partir des taux de défectuosité des pièces mobiles de la pluralité de pièces mobiles,
- en fonction du taux d'encrassement du système de motorisation, déterminer des paramètres de nettoyage d'une séquence de nettoyage comprenant une pluralité de cycles de nettoyage, les dits paramètres de nettoyage comprenant un nombre de cycles de nettoyage et des paramètres d'injection comprenant notamment pour chaque cycle de nettoyage une durée du dit cycle de nettoyage et / ou une quantité de fluide à injecter pendant le dit cycle de nettoyage, et
- commander la mise en oeuvre de la séquence de nettoyage par le dispositif d'injection selon les paramètres d'injection déterminés.

Ainsi, après diagnostic, le moyen de commande détermine des paramètres de nettoyage appropriés pour une séquence de nettoyage efficace adaptée à l'état réel du moteur à nettoyer.

Les paramètres d'injection comprennent notamment pour chaque cycle de nettoyage une durée du dit cycle de nettoyage et / ou une quantité de fluide à injecter. Ils peuvent comprendre également :
- une température et / ou une pression du fluide injecté et / ou
- un état du fluide à injecter et / ou
- une composition du fluide à injecter, notamment une proportion d'hydrogène.

Selon un mode de réalisation, le moyen de commande est également agencé pour :
- en fonction du taux d'encrassement du système de motorisation et / ou des taux de défectuosité des pièces mobiles de la pluralité de pièces mobiles, déterminer des paramètres de déplacement d'au moins une ou de chaque pièce mobile pendant une séquence de nettoyage, et
- conformément aux paramètres de déplacement déterminés, commander le déplacement de ladite ou de chaque pièce mobile pendant la séquence de nettoyage mise en oeuvre par le dispositif d'injection.

Ainsi, pendant une séquence de nettoyage, une pièce mobile est entraînée en mouvement selon des paramètres de déplacement appropriés au taux d'encrassement du système de motorisation et / ou aux taux de défectuosité des pièces mobiles. Les mouvements d'une pièce mobile pendant l'injection de fluide nettoyant permettent de mieux gérer la circulation du fluide nettoyant à travers l'ensemble du système de motorisation pour une meilleure efficacité sur l'ensemble des éléments du système de motorisation et de nettoyer la ou les pièces mobiles elles-mêmes de manière plus profonde et plus efficace. De préférence, les pièces mobiles sont mises en mouvement les unes après les autres, successivement de sorte à nettoyer plus efficacement chaque pièce mobile.

Selon un mode de réalisation complémentaire, le moyen de diagnostic est agencé pour déterminer le taux d'encrassement d'un moteur en fonction du taux de défectuosité d'au moins une (ou des) pièce(s) mobile(s) de la pluralité de pièces mobiles et en fonction de paramètres intrinsèques du système de motorisation incluant le moteur. Les paramètres intrinsèques du système de motorisation sont par exemple des paramètres liés à la géométrie du moteur ou à la géométrie du circuit de circulation : le nombre et le volume des cylindres (au moins un), la forme et la section de l'entrée , la forme et la section des conduites de gaz, ... Prendre en compte les paramètres intrinsèques du système de motorisation en complément du taux de défectuosité d'une ou des pièces mobiles permet de mieux définir le taux d'encrassement du système de motorisation et de mieux définir les conditions d'efficacité optimale du fluide nettoyant lorsqu'il circule dans le moteur et le circuit de recirculation

Selon un mode de réalisation complémentaire, le moyen de diagnostic est agencé pour déterminer le taux d'encrassement d'un moteur en fonction également de conditions d'utilisation du système de motorisation. Les conditions d'utilisation du système de motorisation comprennent par exemple un nombre de kilomètres parcourus pour un moteur de véhicule automobile ou un nombre d'heures d'utilisation du moteur depuis une première mise en service ou un dernier nettoyage, un paramètre qualitatif représentatif de la situation la plus fréquente d'utilisation du moteur, par exemple en milieu urbain pour un système de motorisation d'un véhicule automobile, ...

Les paramètres d'une séquence de nettoyage sont ainsi adaptés au mieux au système de motorisation à traiter, en tenant compte en complément de l'état général du système de motorisation, le dit état dépendant de l'usage qui a été fait du système de motorisation ainsi que de l'entretien réalisé sur le système de motorisation.

### Brève description des figures

L'invention sera mieux comprise, et d'autres caractéristiques et avantages de l'invention apparaîtront à la lumière de la description qui suit d'exemples de réalisation d'une installation de nettoyage selon l'invention. Ces exemples sont donnés à titre non limitatif. La description est à lire en relation avec les dessins annexés dans lesquels :
- la figure 1 est une vue d'ensemble d'un système de motorisation classique d'un véhicule automobile, relié à une installation selon l'invention, et
- la figure 2 est un schéma décrivant un mode de fonctionnement de l'installation selon la figure 1.

### Description d'un mode de réalisation de l'invention

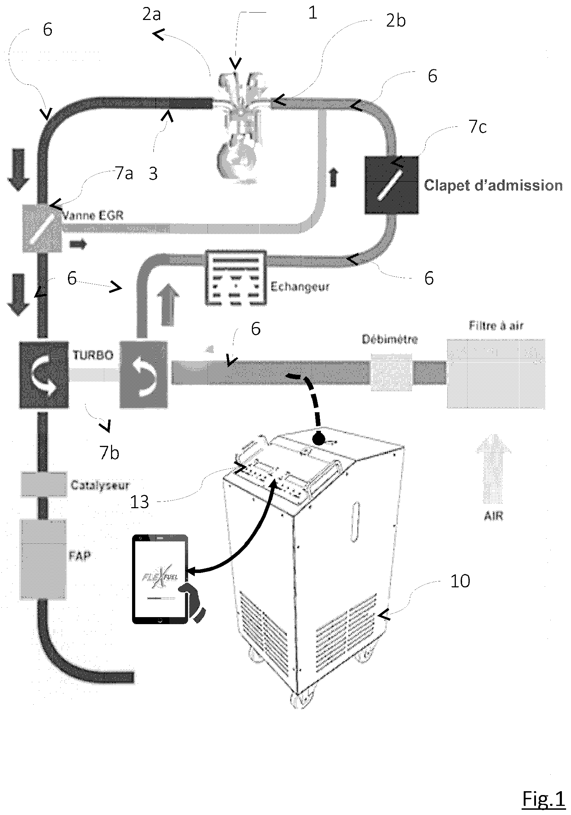

Comme dit précédemment, l'installation selon l'invention est une installation de nettoyage d'un système de motorisation comprenant un moteur à combustion interne et un circuit de circulation de gaz. La figure 1 montre à titre d'exemple un système de motorisation connu pour un véhicule automobile, système de motorisation dont le circuit de circulation des gaz redirige une partie des gaz d'échappement vers l'une des entrées du moteur.

Le moteur comprend une pluralité de cylindres 1 (un seul représenté fig. 1) comprenant chacun une entrée 2a de combustible (injection directe), une entrée 2b d'un mélange gazeux contenant de l'air et une sortie 3 de gaz d'échappement, l'entrée de gaz et la sortie sont fermées par des soupapes mobiles. Tous les cylindres sont identiques et sont alimentés en gaz en parallèle, chacun par leur entrée de gaz. Selon une variante non représentée, le moteur comprend une unique entrée adaptée pour recevoir un mélange combustible-air ou combustible-air-gaz d'échappement.

Le circuit de circulation des gaz de la figure 1 est également connu ; il comprend une pluralité de conduites 6 et une pluralité de pièces mobiles 7 agencées ensemble pour amener un mélange gazeux comprenant une partie des gaz d'échappement sur l'entrée du moteur. Notamment, une vanne EGR 7a permet de prélever une partie des gaz d'échappement pour les réinjecter directement sur l'entrée 2b. Entraîné par les gaz d'échappement, un turbocompresseur 7b permet d'augmenter la pression de l'air admis pour un meilleur remplissage du cylindre. Le turbocompresseur se compose d'une turbine située dans le conduit d'échappement et d'un compresseur situé dans le conduit d'admission d'air, les deux organes étant reliés par un axe ; un filtre filtre l'air entrant dans le turbocompresseur et un débitmètre surveille le débit d'air entrant dans le turbocompresseur ; un organe mobile du turbocompresseur ajuste le débit d'air circulant dans le turbocompresseur. A l'entrée d'air du cylindre, un clapet d'admission 7c permet de réguler la quantité d'air injecté dans le cylindre ; entre la sortie du turbo compresseur et le clapet 7c, un échangeur refroidit l'air comprimé. Les gaz d'échappement sont évacués classiquement par la turbine du turbocompresseur vers un catalyseur et un filtre à particules pour être ensuite rejetés dans l'air. Un calculateur du système de motorisation pilote les mouvements des pièces mobiles 7, notamment le taux d'ouverture de la vanne EGR, le taux d'ouverture du clapet d'admission et les paramètres du turbocompresseur en fonction des performances attendues du moteur. Au fil du temps et de l'utilisation du moteur, des dépôts de suies viennent progressivement limiter les mouvements des pièces mobiles et la section utile des conduites 6 de gaz.

L'installation de nettoyage comprend un dispositif d'injection adapté pour réaliser une séquence de nettoyage du moteur en injectant un fluide nettoyant sur l'une des entrées du moteur à nettoyer.

Dans un exemple mis en oeuvre, le fluide nettoyant utilisé par l'installation de nettoyage est un mélange d'hydrogène et d'oxygène et l'installation est complètement autonome en ce sens qu'elle produit elle-même le fluide nettoyant qu'elle utilise. A cet effet, l'installation comprend, dans une structure en forme de caisson 10, un réservoir d'eau et des moyens connus par ailleurs pour produire de l'hydrogène et de l'oxygène par un procédé d'électrolyse de l'eau. L'installation comprend également un dispositif d'injection de fluide agencé pour injecter le fluide nettoyant dans le moteur sur l'entrée . Si le moteur comprend une unique entrée adaptée à recevoir un mélange gazeux contenant notamment de l'air et du combustible, une sortie du dispositif d'injection de l'installation de nettoyage est reliée à la dite entrée , en amont de la soupape d'admission. Si le moteur comprend au moins deux entrées , la sortie du dispositif d'injection de l'installation de nettoyage peut être reliée soit à l'entrée destinée à recevoir un mélange gazeux contenant notamment de l'air soit à l'entrée destinée à recevoir du combustible (moteur dit à injection directe). Dans l'exemple de la figure 1, la sortie du dispositif d'injection est connectée (traits épais en pointillés) à l'entrée d'air du turbocompresseur et est ainsi reliée à l'entrée destinée à recevoir le mélange gazeux contenant l'air.

Sur le dessus de la structure est prévu une interface utilisateur 13 permettant à l'utilisateur de régler l'installation, d'entrer des paramètres nécessaires au fonctionnement de l'installation, de déclencher une séquence de nettoyage, d'être informé de l'état d'avancement d'une séquence de nettoyage en cours, de piloter des organes mobiles, .... L'interface utilisateur comprend notamment un écran d'affichage d'information et un moyen de sélectionner une information affichée à un instant donné sur l'écran. Le moyen de sélection est par exemple une souris permettant le déplacement d'un curseur sur l'écran, une couche tactile recouvrant l'écran d'affichage, ... Dans une variante, non représentée sur les figures, l'interface utilisateur est portable (smartphone, tablette, ordinateur portable, ...) et communique avec l'installation par une liaison sans fil telle qu'une liaison Bluetooth, une liaison Wifi, ...

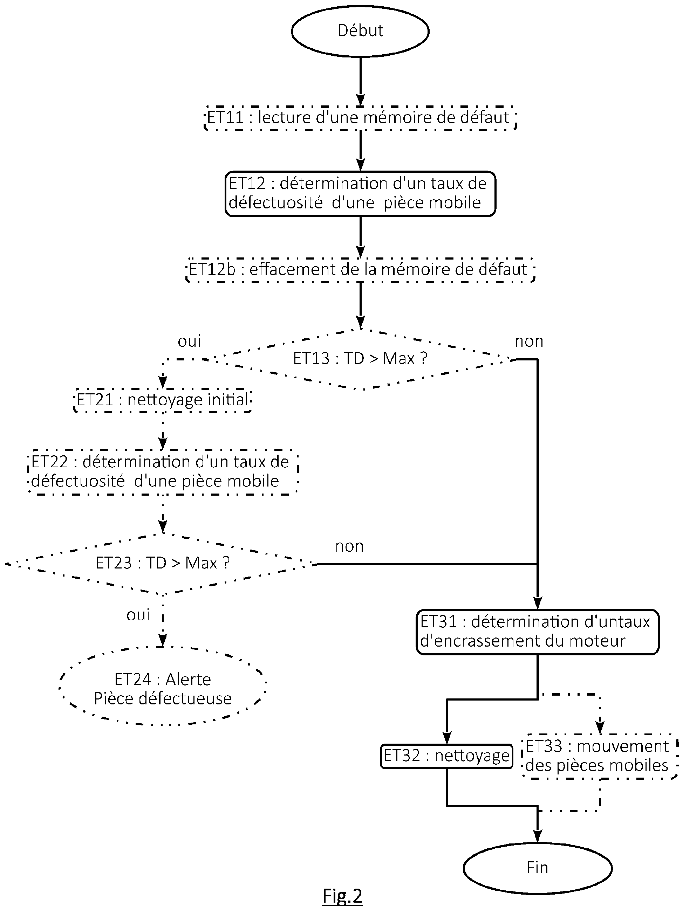

Une installation selon l'invention comprend également un moyen de diagnostic de l'état du système de motorisation et un moyen de commande pour la mise en oeuvre d'une séquence de nettoyage adaptée au diagnostic réalisé. Les fonctions techniques essentielles du moyen de diagnostic et du moyen de commande sont représentées en traits pleins sur la figure 2. Les fonctions additionnelles sont représentées en pointillés.

D'un point de vue réalisation pratique, dans l'exemple mis en oeuvre, le moyen de diagnostic et le moyen de commande sont constitués d'un microprocesseur associé à une mémoire de programme. Le microprocesseur est connecté au calculateur du système de motorisation pilotant le fonctionnement global du système de motorisation à nettoyer ; le calculateur du système de motorisation pilote notamment les mouvements des pièces mobiles. Le microprocesseur est également connecté au dispositif d'injection de fluide nettoyant dont il pilote le fonctionnement. La mémoire de programme mémorise un programme exécutable par le microprocesseur ; le dit programme comprend une pluralité de lignes de codes appropriées pour la mise en oeuvre des fonctions du moyen de diagnostic et des fonctions du moyen de commande dans le cadre de l'invention.

Selon l'invention, un diagnostic du système de motorisation est effectué avant son nettoyage.

Tout d'abord, un taux de défectuosité d'une pièce mobile est déterminé (ET12). A cet effet, le microprocesseur transmet au calculateur du système de motorisation des instructions pour commander le déplacement de la dite pièce mobile entre ses deux positions extrêmes, les autres pièces mobiles étant maintenues immobiles ; le calculateur du système de motorisation met en mouvement la dite pièce puis, après mouvement de la dite pièce mobile, transmet au microprocesseur une mesure des deux positions extrêmes de ladite pièce mobile ; le microcontrôleur calcule ensuite le taux de défectuosité de la dite pièce concernée.

Les deux positions extrêmes correspondent à la position ouverte et la position fermée de la pièce mobile considérée (vanne EGR, clapet d'admission, organe mobile du turbocompresseur à géométrie variable, etc). Lorsque aucune suie ne vient gêner le fonctionnement d'une pièce mobile, celle-ci est mobile selon une course maximale théorique C0 entre une position où le débit de fluide est égal à 100 % du débit théorique de la conduite en amont de la pièce mobile et une position où le débit de fluide à travers la pièce mobile est nul. Au fil de l'utilisation du système de motorisation, les suies s'accumulent autour des pièces mobiles, de sorte qu'une pièce mobile s'ouvre de moins en moins bien (la valeur maximale du débit qu'elle permet diminue) et se ferme de moins en moins bien (la valeur minimale du débit de fluide n'est plus nul et augmente) de sorte que sa course C entre ses deux positions extrêmes diminue au fil du temps. Ainsi la course de la pièce mobile permet de définir son taux de défectuosité : TD = (C0-C)/C0.

A noter que certaines pièces mobiles sont mobiles en translation, dans ce cas la course de la pièce peut correspondre à une distance linéaire mesurée par exemple en millimètre ; c'est le cas par exemple de l'organe mobile du turbocompresseur ou de la vanne EGR. D'autres pièces mobiles sont mobiles en rotation, dans ce cas la course de la pièce peut correspondre à une distance angulaire mesurée par exemple en degré ; c'est le cas par exemple du clapet d'admission. En variante, le taux d'ouverture (exprimé en %) d'une pièce mobile peut être utilisé comme mesure de la course de la pièce mobile ; le taux d'ouverture d'une vanne définit par exemple la proportion de gaz que la vanne laisse passer ; le taux d'ouverture d'une vanne est nul lorsqu'elle est totalement fermée et il est égal à 100 % lorsque la vanne est totalement ouverte ; la course de la vanne est ainsi égale à la valeur maximale du taux d'ouverture moins la valeur minimale du taux d'ouverture au moment du diagnostic, la course maximale théorique étant égale à 100 %.

La détermination du taux de défectuosité est répétée pour chaque pièce mobile pour diagnostiquer les pièces mobiles les unes après les autres. L'ordre dans lequel sont diagnostiquées les pièces mobiles peut être prédéfini et mémorisé dans la mémoire de programme. Dans l'exemple mis en oeuvre, par souci d'efficacité du diagnostic, avant le diagnostic de la première pièce mobile, le microcontrôleur transmet des instructions au calculateur habituel du système de motorisation pour lire une mémoire de défaut dudit calculateur (ET11). S'il reçoit en retour une information relative à un défaut de l'une des pièces mobiles, par exemple la vanne EGR, la pièce mobile présentant un défaut est diagnostiquée en premier. Après lecture de la mémoire de défaut (ET11) ou après détermination du taux de défectuosité (ET12), la mémoire de défaut peut être effacée (ET12b).

Le microprocesseur vérifie si le taux de défectuosité TD d'une pièce mobile est supérieur à une valeur maximale admissible (ET13). La valeur maximale admissible est par exemple TD = 100 %, qui correspond à une course C = 0, c'est à dire à une pièce qui ne peut plus bouger. Par sécurité, la valeur maximale admissible peut être choisie égale à 90 %. Si le taux de défectuosité TD d'une pièce mobile est supérieur à la valeur maximale admissible, le microprocesseur transmet au dispositif d'injection des paramètres d'injection appropriés pour la mise en oeuvre d'une séquence de nettoyage initiale (ET21) ; la séquence initiale est par exemple brève (par exemple un unique cycle de nettoyage de quelques dizaines de minutes) mais intense. Après la séquence de nettoyage initiale, le taux de défectuosité de la même pièce mobile est déterminé à nouveau (ET22) : le microprocesseur transmet des instructions au calculateur pour commander le déplacement de la même pièce mobile entre ses deux positions extrêmes et reçoit en retour, après mouvement (ou absence de mouvement) de la pièce, une mesure de ses deux positions extrêmes; si les deux positions extrêmes de la pièce sont les mêmes que précédemment, le taux de défectuosité déterminé à nouveau est supérieur à la valeur maximale admissible (ET23), cela signifie que le nettoyage initial n'a pas permis d'améliorer l'état général de la pièce ; le microprocesseur considère dans ce cas qu'un nettoyage même intensif et long a peu de chance d'être efficace et il transmet sur une moyen d'affichage une alerte informant que la pièce mobile doit être remplacée (alerte Pièce défectueuse).

Dans un exemple concret et assurément non limitatif, la séquence de nettoyage initiale est par exemple brève, de l'ordre de 10 à 30 mn, mais intense avec un débit de fluide nettoyant de l'ordre 700 /heure, avec en parallèle une mise en mouvement de la pièce en ouverture ou en fermeture en alternance toutes les2à5mn.

Une fois le diagnostic posé, le moyen de commande détermine le taux d'encrassement du système de motorisation global (ET31) en fonction du taux de défectuosité de chaque pièce mobile. Selon le mode de réalisation mis en oeuvre, le taux d'encrassement du système de motorisation est choisi égal au taux de défectuosité le plus grand parmi les taux de défectuosité de toutes les pièces mobiles prises en compte. Selon un autre mode de réalisation, le taux de défectuosité de chaque pièce mobile est pondéré par un coefficient représentatif de l'importance d'une défection de ladite pièce mobile dans le fonctionnement normal du moteur ou de l'importance des conséquences d'une défection de la dite pièce mobile sur le fonctionnement du moteur (endommagement définitif du moteur, coût de remplacement de la pièce mobile important, pollution générée importante, ...), puis le taux d'encrassement du système de motorisation est déterminé en fonction des taux de défectuosité pondérés des pièces mobiles prises en compte.

Selon une variante, pour déterminer le taux d'encrassement du système de motorisation global, en plus des taux de défectuosité des pièces mobiles, le moyen de commande peut prendre en compte des paramètres intrinsèques du système de motorisation, comme par exemple :
- la géométrie du moteur, la cylindrée du moteur, le nombre de cylindres, le volume d'un cylindre, le type de combustible ...
- le débit d'air, le débit de gaz d'échappement admis dans un cylindre en fonctionnement nominal,
- les paramètres intrinsèques des systèmes de dépollution associés au système de motorisation (par exemple un circuit de recirculation des gaz d'échappement avec vanne EGR /ou un filtre à particules FAP)
- les paramètres intrinsèques du turbocompresseur.

Selon une autre variante encore, qui peut être combinée ou non avec la précédente, le moyen de commande peut aussi prendre en compte des conditions d'utilisation du système de motorisation, comme par exemple :
- une durée d'utilisation du système de motorisation, durée définie par exemple par un nombre de kilomètres parcourus par le véhicule dans lequel le système de motorisation est installé, un nombre d'heures de travail effectuées par une machine industrielle dans laquelle le système de motorisation est installé, ...,
- une date de mise en fonctionnement du système de motorisation (ou date de mise en circulation du véhicule,
- un coefficient de pondération déterminé en fonction d'une situation usuelle dans laquelle le système de motorisation est utilisé le plus souvent (par exemple pour un véhicule, utilisation en ville, sur route, autoroute, mixte),
- un coefficient de pondération déterminé en fonction du type de combustible utilisé avec le système de motorisation,
- un coefficient de pondération déterminé en fonction d'un éventuel additif ajouté au combustible du système de motorisation en vue de limiter son taux d'encrassement, ...

Après détermination du taux d'encrassement du système de motorisation, le moyen de commande de l'installation va piloter une séquence de nettoyage, comprenant une pluralité de cycles de nettoyage, au moins un cycle. Pour cela, en fonction du taux d'encrassement du système de motorisation, le moyen de commande détermine des paramètres de nettoyage (ET32) ; lesdits paramètres de nettoyage comprennent notamment un nombre de cycles de nettoyage et des paramètres d'injection comprenant pour chaque cycle de nettoyage une durée du dit cycle de nettoyage et / ou une quantité de fluide à injecter pendant le dit cycle de nettoyage. Les paramètres d'injection peuvent également comprendre, pour chaque cycle de nettoyage :
- une température et / ou une pression du fluide injecté et / ou
- un état du fluide à injecter et / ou
- une composition du fluide à injecter, notamment une proportion d'hydrogène.

Le moyen de commande ensuite commande la mise en oeuvre de la séquence de nettoyage au dispositif d'injection, selon les paramètres d'injection déterminés (ET32).

Dans l'exemple mis en oeuvre également, le moyen de commande est également agencé pour (ET33) :
- en fonction du taux d'encrassement du système de motorisation et / ou des taux de défectuosité des pièces mobiles de la pluralité de pièces mobiles, déterminer des paramètres de déplacement d'au moins une ou de chaque pièce mobile pendant une séquence de nettoyage, et
- conformément aux paramètres de déplacement déterminés, commander le déplacement de ladite ou de chaque pièce mobile pendant la séquence de nettoyage mise en oeuvre par le dispositif d'injection.

Dans un exemple concret et assurément non limitatif, trois cycles de nettoyage sont réalisés successivement, d'une durée chacun de 30 mn à 1H30, cycles au cours desquels le fluide nettoyant utilisé est un mélange gazeux d'oxygène et d'hydrogène en mélange stoechiométrique avec un débit de 500 I/h à 700 I/h. Au cours du premier cycle, la vanne EGR est mise en mouvement : la vanne est ouverte de 50% (elle laisse passer 50 % du gaz qu'elle reçoit) en début du 1^{er} cycle pendant un premier temps prédéfini de 2 à 10 mn, puis la vanne EGR est ouverte de 0 % (vanne fermée) pendant un deuxième temps prédéfini de l'ordre de 2 à 10 mn, puis, pendant un troisième temps prédéfini de l'ordre de 5 à 15 mn, la vanne EGR est alternativement ouverte et fermée (positions extrêmes) toutes les 0,5 s environ (fonctionnement alterné) Au cours du 2ème cycle, le clapet d'admission est mis en mouvement de manière similaire . Au cours du 3ème cycle, l'organe mobile du turbocompresseur est mis en mouvement de manière similaire. Pour chaque cycle, le débit, la température et la pression du fluide de nettoyage sont ajustées en fonction du taux de défectuosité de la pièce mobile mise en mouvement au cours dudit cycle .

### Nomenclature

- 1.: cylindre
- 2a.: entrée de combustible
- 2b.: entrée de gaz
- 3.: sortie de gaz d'échappement
- 6.: conduites de gaz
- 7.: pièces mobiles
- 7a.: vanne EGR
- 7b.: Turbocompresseur
- 7c.: Clapet d'admission
- 10.: caisson
- 13: interface utilisateur

## Revendications

1. Installation de nettoyage d'un système de motorisation, ledit système de motorisation comprenant un moteur à combustion interne et un circuit de circulation de gaz, le moteur comprenant une pluralité d'entrées (2a, 2b) destinées à recevoir des produits combustibles et une sortie de gaz d'échappement (3), le circuit de circulation des gaz comprenant une pluralité de conduites (6) et une pluralité de pièces mobiles (7, 7a, 7b, 7c) agencées ensemble pour amener sur une des entrées du moteur un mélange gazeux approprié, l'installation de nettoyage comprenant un dispositif d'injection adapté pour réaliser une séquence de nettoyage du système de motorisation en injectant un fluide nettoyant sur l'une des entrées du moteur, l'installation **caractérisée en ce qu'**elle comprend également un moyen de diagnostic agencé pour déterminer un taux d'encrassement du dit système de motorisation en fonction d'un taux de défectuosité d'au moins une des pièces mobiles (7, 7a, 7b, 7c), et un moyen de commande agencé pour fournir au dispositif d'injection des paramètres de nettoyage pour la mise en oeuvre de la séquence de nettoyage, les dits paramètres de nettoyage étant fonction du taux d'encrassement du système de motorisation.

2. Installation selon la revendication 1, adaptée pour un système de motorisation comprenant un circuit de circulation de gaz agencé pour amener sur l'entrée du moteur un mélange gazeux approprié comprenant une partie des gaz d'échappement disponibles sur la sortie d'échappement du moteur.

3. Installation selon l'une des revendications 1 ou 2 dans laquelle la pluralité de pièces mobiles du circuit de circulation des gaz comprend un clapet d'admission (7c) et / ou une vanne EGR (7a) et /ou un organe mobile d'un turbo compresseur (7b).

4. Installation selon l'une des revendications 1 à 3 dans laquelle le moyen de diagnostic est agencé pour commander un déplacement d'une pièce mobile (7, 7a, 7b, 7c) entre deux positions extrêmes, les autres pièces mobiles de la pluralité de pièces mobiles étant maintenues dans une position fixe, et pour déterminer le taux de défectuosité de la dite pièce mobile en fonction d'une course parcourue entre les deux positions extrêmes de la pièce mobile et en fonction d'une course maximale théorique.

5. Installation selon la revendication précédente dans laquelle le moyen de diagnostic est également agencé pour lire une mémoire de défauts associée au système de motorisation et, si une information relative à un défaut sur une pièce mobile (7, 7a, 7b, 7c) est enregistrée dans la mémoire de défauts, agencé pour déterminer le taux de défectuosité de la dite pièce mobile en fonction de la course parcourue entre les deux positions extrêmes de la pièce mobile, en fonction de la course maximale théorique et en fonction de l'information relative au défaut lue dans la mémoire de défaut.

6. Installation selon l'une des revendications 4 ou 5 dans laquelle le moyen de diagnostic est agencé pour déterminer successivement le taux de défectuosité de chaque pièce mobile (7, 7a, 7b, 7c).

7. Installation selon l'une des revendications précédentes dans laquelle le moyen de diagnostic est agencé pour, si le taux de défectuosité d'une pièce mobile (7, 7a, 7b, 7c) est supérieur à une valeur prédéfinie, commander la mise en oeuvre d'une séquence de nettoyage initiale puis déterminer à nouveau le taux de défectuosité de la dite pièce mobile et alerter d'une pièce mobile défaillante si le taux de défectuosité déterminé à nouveau est supérieur ou égal au taux de défectuosité précédemment déterminé pour la dite pièce mobile,

8. Installation selon l'une des revendications précédentes dans laquelle le moyen de commande est agencé pour :
• déterminer le taux d'encrassement du système de motorisation en fonction des taux de défectuosité des pièces mobiles (7, 7a, 7b, 7c) de la pluralité de pièces mobiles.
• en fonction du taux d'encrassement du système de motorisation, déterminer des paramètres de nettoyage d'une séquence de nettoyage comprenant une pluralité de cycles de nettoyage, les dits paramètres de nettoyage comprenant un nombre de cycles de nettoyage et des paramètres d'injection comprenant notamment pour chaque cycle de nettoyage une durée du dit cycle de nettoyage et / ou une quantité de fluide à injecter pendant le dit cycle de nettoyage, et
• commander la mise en œuvre de la séquence de nettoyage par le dispositif d'injection selon les paramètres d'injection déterminés.

9. Installation selon la revendication 8 dans laquelle les paramètres d'injection transmis au dispositif d'injection comprennent également, pour chaque cycle de nettoyage :
• une température et / ou une pression du fluide injecté et / ou
• un état du fluide à injecter et / ou
• une composition du fluide à injecter, notamment une proportion d'hydrogène.

10. lnstallation selon l'une des revendications 8 à 9 dans laquelle le moyen de commande est également agencé pour :
• en fonction du taux d'encrassement du système de motorisation et / ou des taux de défectuosité des pièces mobiles de la pluralité de pièces mobiles, déterminer des paramètres de déplacement d'au moins une ou de chaque pièce mobile (7, 7a, 7b, 7c) pendant une séquence de nettoyage, et
• conformément aux paramètres de déplacement déterminés, commander le déplacement de ladite ou de chaque pièce mobile pendant la séquence de nettoyage mise en oeuvre par le dispositif d'injection.

11. Installation selon l'une des revendications 8 à 10 dans laquelle le moyen de diagnostic est agencé pour déterminer le taux d'encrassement d'un moteur en fonction du taux de défectuosité d'au moins une (ou des) pièce(s) mobile(s) de la pluralité de pièces mobiles (7, 7a, 7b, 7c) et en fonction de paramètres intrinsèques du système de motorisation incluant le moteur

12. Installation selon l'une des revendications 8 à 11 dans laquelle le moyen de diagnostic est agencé pour déterminer le taux d'encrassement d'un moteur en fonction également de conditions d'utilisation du système de motorisation.

## Patentansprüche

1. Reinigungsanlage eines Antriebssystems, wobei das Antriebssystem einen Verbrennungsmotor und einen Gaszirkulationskreislauf beinhaltet, wobei der Motor eine Vielzahl von Einlässen (2a, 2b), die dazu bestimmt sind, brennbare Produkte aufzunehmen, und einen Abgasauslass (3) beinhaltet, wobei der Gaszirkulationskreislauf eine Vielzahl von Leitungen (6) und eine Vielzahl von beweglichen Teilen (7, 7a, 7b, 7c) beinhaltet, die gemeinsam angeordnet sind, um ein geeignetes Gasgemisch zu einem der Einlässe des Motors zu führen, wobei die Reinigungsanlage eine Einspritzvorrichtung beinhaltet, die dazu angepasst ist, eine Sequenz zur Reinigung des Antriebssystems durchzuführen, indem sie ein Reinigungsfluid in einen der Einlässe des Motors einspritzt,
wobei die Anlage **dadurch gekennzeichnet ist, dass** sie ferner Folgendes beinhaltet: ein Diagnosemittel, das dazu angeordnet ist, einen Verschmutzungsgrad des Antriebssystems in Abhängigkeit von einem Fehlergrad mindestens eines der beweglichen Teile (7, 7a, 7b, 7c) zu bestimmen, und ein Steuermittel, das dazu angeordnet ist, der Einspritzvorrichtung Reinigungsparameter zur Durchführung der Reinigungssequenz bereitzustellen, wobei die Reinigungsparameter von dem Verschmutzungsgrad des Antriebssystems abhängen.

2. Anlage nach Anspruch 1, die für ein Antriebssystem angepasst ist, das einen Gaszirkulationskreislauf beinhaltet, der dazu angeordnet ist, eine geeignete Gasmischung, die einen Teil der am Motorauslass verfügbaren Abgase beinhaltet, zu dem Einlass des Motors zu führen.

3. Anlage nach einem der Ansprüche 1 oder 2, wobei die Vielzahl von beweglichen Teilen des Gaszirkulationskreislaufs ein Einlassventil (7c) und/oder ein AGR-Ventil (7a) und/oder ein mobiles Organ eines Turbokompressors (7b) beinhaltet.

4. Anlage nach einem der Ansprüche 1 bis 3, wobei das Diagnosemittel dazu angeordnet ist, eine Bewegung eines beweglichen Teils (7, 7a, 7b, 7c) zwischen zwei Endstellungen anzusteuern, wobei die anderen beweglichen Teile der Vielzahl von beweglichen Teilen in einer festen Stellung gehalten werden, und den Fehlergrad des beweglichen Teils in Abhängigkeit von einem zwischen den zwei Endstellungen des beweglichen Teils zurückgelegten Weg und in Abhängigkeit von einem theoretischen Maximalweg zu bestimmen.

5. Anlage nach dem vorhergehenden Anspruch, wobei das Diagnosemittel ferner dazu angeordnet ist, einen Fehlerspeicher, der mit dem Antriebssystem assoziiert ist, auszulesen, und, wenn eine Information über einen Fehler eines beweglichen Teils (7, 7a, 7b, 7c) in dem Fehlerspeicher aufgezeichnet ist, dazu angeordnet ist, den Fehlergrad des beweglichen Teils in Abhängigkeit von dem zwischen den zwei Endstellungen des beweglichen Teils zurückgelegten Weg, in Abhängigkeit von dem theoretischen Maximalweg und in Abhängigkeit von der Information über den Fehler, die aus dem Fehlerspeicher ausgelesen wurde, zu bestimmen.

6. Anlage nach einem der Ansprüche 4 oder 5, wobei das Diagnosemittel dazu angeordnet ist, den Fehlergrad jedes beweglichen Teils (7, 7a, 7b, 7c) nacheinander zu bestimmen.

7. Anlage nach einem der vorhergehenden Ansprüche, wobei das Diagnosemittel dazu angeordnet ist, falls der Fehlergrad eines beweglichen Teils (7, 7a, 7b, 7c) größer als ein vordefinierter Wert ist, die Durchführung einer Vorreinigungssequenz anzusteuern und dann den Fehlergrad des beweglichen Teils erneut zu bestimmen und eine Warnung bezüglich eines fehlerhaften beweglichen Teils auszugeben, falls der erneut bestimmte Fehlergrad größer als oder gleich dem für das bewegliche Teil zuvor bestimmten Fehlergrad ist.

8. Anlage nach einem der vorhergehenden Ansprüche, wobei das Steuermittel zu Folgendem angeordnet ist:
• Bestimmen des Verschmutzungsgrads des Antriebssystems in Abhängigkeit von den Fehlergraden der beweglichen Teile (7, 7a, 7b, 7c) der Vielzahl von beweglichen Teilen,
• in Abhängigkeit von dem Verschmutzungsgrad des Antriebssystems, Bestimmen von Reinigungsparametern einer Reinigungssequenz, die eine Vielzahl von Reinigungszyklen beinhaltet, wobei die Reinigungsparameter eine Anzahl von Reinigungszyklen und Einspritzparameter beinhalten, die insbesondere für jeden Reinigungszyklus eine Dauer des Reinigungszyklus und/oder eine während des Reinigungszyklus einzuspritzende Fluidmenge beinhalten, und
• Ansteuern der Durchführung der Reinigungssequenz durch die Einspritzvorrichtung gemäß den bestimmten Einspritzparametern.

9. Anlage nach Anspruch 8, wobei die an die Einspritzvorrichtung übertragenen Einspritzparameter für jeden Reinigungszyklus ferner Folgendes beinhalten:
• eine Temperatur und/oder einen Druck des eingespritzten Fluids und/oder
• einen Zustand des einzuspritzenden Fluids und/oder
• eine Zusammensetzung des einzuspritzenden Fluids, insbesondere einen Wasserstoffantei I.

10. Anlage nach einem der Ansprüche 8 bis 9, wobei das Steuermittel ferner zu Folgendem angeordnet ist:
• in Abhängigkeit von dem Verschmutzungsgrad des Antriebssystems und/oder der Fehlergrade der beweglichen Teile der Vielzahl von beweglichen Teilen, Bestimmen von Bewegungsparametern mindestens eines oder jedes beweglichen Teils (7, 7a, 7b, 7c) während einer Reinigungssequenz und
• entsprechend den bestimmten Bewegungsparametern, Ansteuern der Bewegung des oder jedes beweglichen Teils während der Reinigungssequenz, die durch die Einspritzvorrichtung durchgeführt wird.

11. Anlage nach einem der Ansprüche 8 bis 10, wobei das Diagnosemittel dazu angeordnet ist, den Verschmutzungsgrad eines Motors in Abhängigkeit von dem Fehlergrad mindestens eines beweglichen Teils (oder der beweglichen Teile) der Vielzahl von beweglichen Teilen (7, 7a, 7b, 7c) und in Abhängigkeit von inhärenten Parametern des Antriebssystems, umfassend den Motor, zu bestimmen.

12. Anlage nach einem der Ansprüche 8 bis 11, wobei das Diagnosemittel dazu angeordnet ist, den Verschmutzungsgrad eines Motors zusätzlich in Abhängigkeit von Nutzungsbedingungen des Antriebssystems zu bestimmen.

## Claims

1. Installation for cleaning a drive system, said drive system comprising an internal combustion engine and a gas circulation circuit, the engine comprising a plurality of inlets (2a, 2b) intended for receiving combustible products and an exhaust gas outlet (3), the gas circulation circuit comprising a plurality of pipes (6) and a plurality of moving parts (7, 7a, 7b, 7c) designed together to feed to one of the inlets of the engine an appropriate gas mixture, the cleaning installation comprising an injection device adapted to execute a sequence for cleaning the drive system by injecting a cleaning fluid into one of the inlets of the engine,
the installation being **characterized in that** it also comprises diagnostic means designed to determine a level of soiling of said drive system as a function of a level of defectiveness of at least one of the moving parts (7, 7a, 7b, 7c), and a control means designed to supply to the injection device cleaning parameters for the execution of the cleaning sequence, said cleaning parameters being a function of the level of soiling of the drive system.

2. Installation according to Claim 1, suitable for a drive system comprising a gas circulation circuit designed to feed to the inlet of the engine an appropriate gas mixture comprising some of the exhaust gases available at the exhaust outlet of the engine.

3. Installation according to either of Claims 1 and 2, wherein the plurality of moving parts of the gas circulation circuit comprises an inlet valve (7c) and/or an EGR valve (7a) and/or a moving member of a turbocompressor (7b).

4. Installation according to one of Claims 1 to 3, wherein the diagnostic means are designed to command a movement of a moving part (7, 7a, 7b, 7c) between two extreme positions, the other moving parts of the plurality of moving parts being kept in a fixed position, and to determine the level of defectiveness of said moving part as a function of a distance travelled between the two extreme positions of the moving part and as a function of a theoretical maximum distance.

5. Installation according to the preceding claim, wherein the diagnostic means are also designed to read a fault memory associated with the drive system and, if an item of information relating to a fault in a moving part (7, 7a, 7b, 7c) is stored in the fault memory, designed to determine the level of defectiveness of said moving part as a function of the distance travelled between the two extreme positions of the moving part, as a function of the theoretical maximum distance and as a function of the item of information relating to the fault read in the fault memory.

6. Installation according to either of Claims 4 and 5, wherein the diagnostic means are designed to successively determine the level of defectiveness of each moving part (7, 7a, 7b, 7c).

7. Installation according to one of the preceding claims, wherein the diagnostic means are designed, if the level of defectiveness of a moving part (7, 7a, 7b, 7c) is greater than a predefined value, to command the execution of an initial cleaning sequence and then to determine again the level of defectiveness of said moving part and to report a failing moving part if the level of defectiveness again determined is greater than or equal to the level of defectiveness previously determined for said moving part.

8. Installation according to one of the preceding claims, wherein the control means are designed:
• to determine the level of soiling of the drive system as a function of the levels of defectiveness of the moving parts (7, 7a, 7b, 7c) of the plurality of moving parts,
• as a function of the level of soiling of the drive system, to determine cleaning parameters of a cleaning sequence comprising a plurality of cleaning cycles, said cleaning parameters comprising a number of cleaning cycles and injection parameters comprising in particular for each cleaning cycle a duration of said cleaning cycle and/or a quantity of fluid to be injected during said cleaning cycle, and
• to command the execution of the cleaning sequence by the injection device in accordance with the injection parameters that have been determined.

9. Installation according to Claim 8, wherein the injection parameters transmitted to the injection device also comprise, for each cleaning cycle:
• a temperature and/or a pressure of the injected fluid, and/or
• a state of the fluid to be injected, and/or
• a composition of the fluid to be injected, in particular a proportion of hydrogen.

10. Installation according to either of Claims 8 and 9, wherein the control means are also designed:
• as a function of the level of soiling of the drive system and/or the levels of defectiveness of the moving parts of the plurality of moving parts, to determine movement parameters of at least one or of each moving part (7, 7a, 7b, 7c) during a cleaning sequence, and
• in accordance with the movement parameters that have been determined, to command the movement of said or of each moving part during the cleaning sequence executed by the injection device.

11. Installation according to one of Claims 8 to 10, wherein the diagnostic means are designed to determine the level of soiling of an engine as a function of the level of defectiveness of at least one (or more) of the moving parts of the plurality of moving parts (7, 7a, 7b, 7c) and as a function of intrinsic parameters of the drive system including the engine.

12. Installation according to one of Claims 8 to 11, wherein the diagnostic means are designed to determine the level of soiling of an engine also as a function of conditions of use of the drive system.
